# EUROPEAN PATENT APPLICATION

(11) **EP 3 255 541 A1**
(43) Date of publication of application: **13.12.2017**
(21) Application number: 16173139.3
(22) Date of filing: 06.06.2016
(51) Int. Cl.: G06F 9/445

(54) **A METHOD AND SYSTEM FOR INSTALLING SOFTWARE**

(71) Applicant: Advanced Digital Broadcast S.A., 1292 Chambesy (CH)
(72) Inventor: Storto, Marco, 20126 Milano (IT); Pellegrini, Roberto, 20126 Milano (IT)
(74) Representative: Kancelaria Eupatent.pl Sp. z.o.o

(57) **Abstract**

A method for installing software on a controlled device (110), comprising the steps of: instructing (203) the controlled device (110) to download a software file; sending (206) a notification to a controlling device (120) that software can be installed; receiving (208), from the controlling device (120), an acceptance message to install the software; and instructing (212) the controlled device (110) to install the software file.

## Description

### TECHNICAL FIELD

The present disclosure is related to installing software, in particular to an opt-in process for firmware upgrades for embedded appliances.

### BACKGROUND

Technology development, in particular in the areas of networks and embedded devices, results in an increasing number of network-connected devices of various types. These devices may cooperate with each other, for example in an Internet of Things infrastructure. A networking device typically comprises a set of hardware elements, including a software-controlled processor. The basic operation of the device is controlled by a so-called firmware, i.e. software that provides control, monitoring and data manipulation of engineered products and systems. In order to keep the device up to date with the latest technology developments, the firmware may need to be updated, e.g. to allow communication according to new standards.

Firmware update methods are generally known. For example, a US patent application US20050055595 presents a system for remotely updating software on an electronic device connected to a network. The electronic devices have a non-volatile rewritable storage unit divided into at least two partitions, one of which will contain core firmware and the other of which will contain auxiliary software. When an update is received at the device, the updated core firmware is written to overwrite the partition in the rewritable storage unit that contained the auxiliary software. When this is completed and verified, the previous version of the core firmware stored in the storage unit is disabled from execution by the device. Next, the updated auxiliary software is written to overwrite the old version of the core firmware. When this write is complete, the device determines a suitable time for it to be rebooted to execute the updated software.

In many cases it is necessary to obtain user approval before applying a new firmware version in a device, due to operational or regulatory constraints. This process can be called an opt-in firmware update. Sophisticated devices, such as smartphones, having their own user interface, may simply run a firmware update application that asks the user for approval via the user interface of that device.

For example, a US patent US6023620 presents a method for downloading software into a remotely located cellular telephone via wireless communication. An update server processor sends an offer to remotely update the cellular telephone software. The offer to update appears on an alphanumeric display of the cellular telephone intended to receive the offer. After receiving the offer the cellular telephone subscriber can choose to accept the offer and is typically instructed to press a single or a series of keys located on the cellular telephone. Then, the cellular telephone transmits an SMS message to the update server processor, wherein the message contains an acceptance code.

However, there is a large group of devices, such as embedded appliances, that do not have their own user interface or have an interface that is very limited, e.g. comprises only 7-segments display and buttons or knobs. Presenting a meaningful message to a user may be very problematic.

Therefore, there is a need to improve the methods of opt-in software installation for devices having that have a limited user interface.

### SUMMARY

There is disclosed a method for installing software on a controlled device, comprising the steps of: instructing the controlled device to download a software file; sending a notification to a controlling device that software can be installed; receiving, from the controlling device, an acceptance message to install the software; and instructing the controlled device to install the software file.

The method may comprise sending the notification to the controlling device as a push notification and awaiting reception of an opt-in API call.

The method may further comprise the step of logging the acceptance message and associated metadata in a database.

The method may further comprise scheduling the time of installation of the software file.

The method may further comprise the steps of monitoring for receipt of a message from the controlled device confirming software installation or expiry of a timeout, and rescheduling the time of installation of the software file.

The method may further comprise the step of sending a notification to the controlling device that software has been installed.

The method may comprise communicating with the controlled device using Message Queuing Telemetry Transport (MQTT) or a Constrained Application Protocol (CoAP).

The method may comprise communicating with the controlling device using Representational State Transfer (REST) API over Hypertext Transfer Protocol Secure (HTTPS).

There is also disclosed a computer program comprising program code means for performing all the steps of the method as described above when said program is run on a computer, as well as a computer readable medium storing computer-executable instructions performing all the steps of the method as described above when executed on a computer.

There is also disclosed a system for installing software, the system comprising: at least one controlled device comprising a control unit coupled to a software memory and a network interface; at least one controlling device; and at least one server communicatively connected via a network with the controlled device and the controlling device and operating a device management module configured to perform the steps of the method as described above.

### BRIEF DESCRIPTION OF DRAWINGS

The system and method are presented by means of example embodiments shown in a drawing, in which:
Fig. 1 presents a system for installing software on a controlled device;
Figs. 2A and 2B present a flowchart for software upgrade with user opt-in;
Fig. 3 presents a call flow for software upgrade at the controlled device 110 with user opt-in.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

As utilized herein, the term "example" means serving as a non-limiting example, instance, or illustration. As utilized herein, the terms "for example" and "for example" introduce a list of one or more non-limiting examples, instances, or illustrations.

### DETAILED DESCRIPTION

The present invention is applicable to various types of devices that have network connection capabilities. In particular, it is applicable to devices that have limited man-machine user interfaces or do not have any man-machine user interface at all. The devices can be for example appliances (such as a washing machine, a microwave, a dishwasher), sensors (such as a movement sensor, a temperature sensor, a window opening sensor, a camera, a microphone) or actuators (such as a motor, a driver, a loudspeaker). The device for which the software will be installed (e.g. to perform firmware upgrade) will be called herein a controlled device.

The method and system presented herein include a remote management system with a push notification channel towards an application of a controlling device (such as a device with a user-friendly interface, e.g. a smartphone) via which the user may control software (such as firmware) update on a controlled device (such as an appliance with limited user interface).

In general, the presented remote management system may execute a multi-step software upgrade procedure that comprises the following actions. A new software file is downloaded to the controlled device. Once download is completed, a push notification is sent to a remote application running on a controlling device. The remote application informs end the user of the availability of a new software and request user approval to apply it. Once the user provides approval, the remote application sends a message to the remote management system confirming the user acceptance. Then, the remote management systems logs user acceptance for auditing purposes and instructs the controlled device to apply the new software.

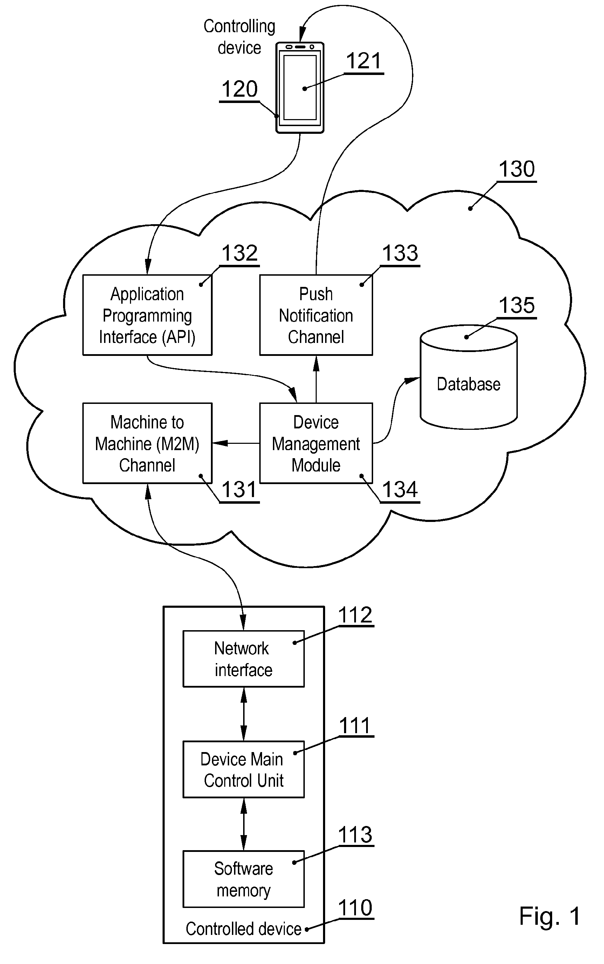

Fig. 1 presents an example embodiment of a system for installing software (such as firmware) on a controlled device 110. The controlled device comprises a software memory 113, typically a non-volatile memory such as Flash memory, wherein the software that can be updated is stored. The device comprises a processor 111 that is controlled by the software stored in the memory 113. The controlled device 110 may communicate with other devices via a network interface 112.

The network interface 112 allows connecting the controlled device 110 to a network 130, wherein a cloud system may operate including various modules. The cloud system is operable by one or more servers. The modules may communicate with the controlled device 110 via a machine to machine (M2M) channel 131. The cloud system includes also a device management module 134 with its associated database 135, an Application Programming Interface (API) 132 and a push notification channel 133 towards an application 121 running on a controlling device 120.

In one embodiment, the system can use Message Queuing Telemetry Transport (MQTT) as the M2M channel, a smartphone as a controlling device, a Representational State Transfer (REST) API over Hypertext Transfer Protocol Secure (HTTPS) and a smartphone system-specific push notification channel.

In another embodiment, the system can use Constrained Application Protocol (CoAP) as the M2M channel, a tablet as a controlling device, a REST API over HTTPS and email as the push notification channel.

The detailed operation of particular modules of the cloud system will be apparent from the description that follows.

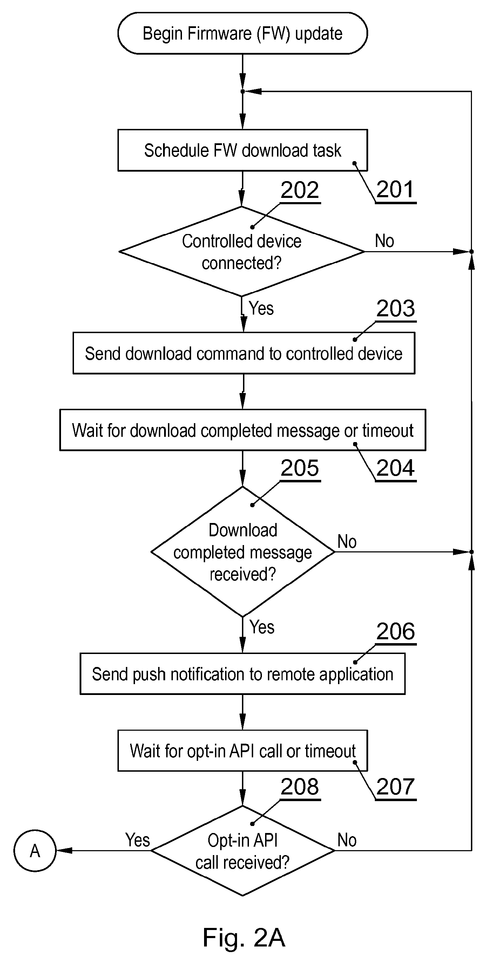

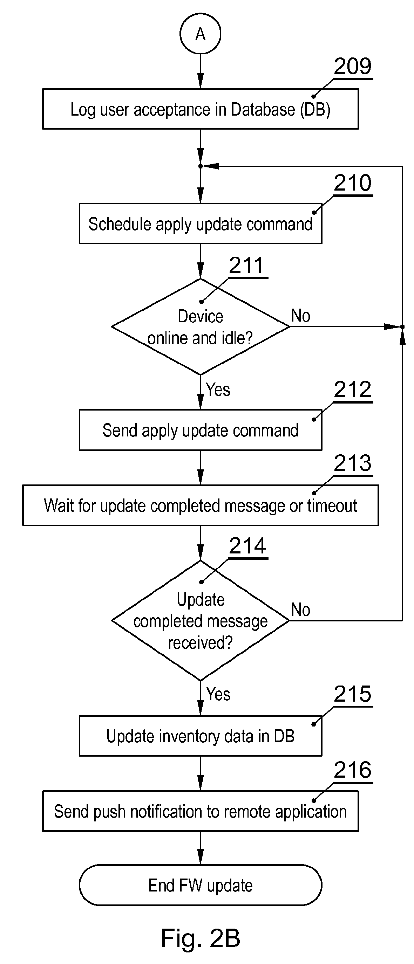

Figs. 2A and 2B present a flowchart for software upgrade with user opt-in.

In step 201, the device management module 134 schedules a software (e.g. firmware - FW) download task. When processing such task in step 202 the device management module 134 checks the connection state of the controlled device 110 and reschedules the task if the controlled device 110 is not connected. If the controlled device 110 is connected, a download command is sent to the controlled device 110 in step 203 and device management module 134 waits until a download completed message is received from the controlled device 110 in step 204. In step 205 if the download completed message is not received before a timeout occurs, then the task is rescheduled for execution.

Once the download complete message is received, the cloud system 130 sends in step 206 a push notification to a remote application 121 registered for the controlled device 110 (in particular, it can be registered for the owner of the controlled device) and waits for reception of a dedicated opt-in API call in step 207. The remote application 121 is operated by a remote controlling device 120 that offers a convenient man-machine user interface for that application (for example, a smartphone or a tablet device offering a touch-sensitive graphical user interface). The remote application 121 requests the owner of the controlled device 110 to accept the software upgrade for the controlled device 110 and upon acceptance (i.e. receiving an acceptance message), notifies the cloud system 130 via an opt-in API call. In step 208, in case opt-in API call is not received before a timeout occurs, the cloud system 130 issues a new push notification to the remote application 121 and waits again.

Once the opt-in API call is received, in step 209 the cloud system 130 logs user acceptance message and associated metadata (such as a timestamp and a remote application ID) in the cloud system database 135 for auditing purposes. Then, the system schedules (i.e. determines the time at which the update task shall be performed) in step 210 an apply update task to the target controlled device 110. When processing the apply update task in step 211, the device management module 134 checks the connection and functionality state of the controlled device 110 and reschedules the task if the controlled device is not connected, or if it is connected but not in an idle state (e.g. an operating cycle is running). If the controlled device 110 is connected, an apply update command is sent to the controlled device 110 (i.e. the device is instructed to install the software file) in step 212 and the device management module 134 waits in step 213 until an update completed message is received from the controlled device 110. In step 214, if an update completed message (i.e. a message confirming software installation) is not received before a timeout occurs then the task is rescheduled for execution.

Once the update completed message is received, in step 215 the system 130 updates the inventory data in the cloud system database 135. Then, in step 216, the system 130 sends push notification to the remote application 121 to inform the owner of the controlled device 110 of the update completion and terminates execution for this controlled device 110.

The method can also be applied without checking if the controlled device 110 is idle state in step 211. However, such check will provide added convenience to the owner of the controlled device, preventing execution of a software upgrade while the controlled device 110 is busy performing an operational cycle, which could be interrupted by the software upgrade.

Step 216 is optional and provides additional convenience for the owner of the controlled device 110.

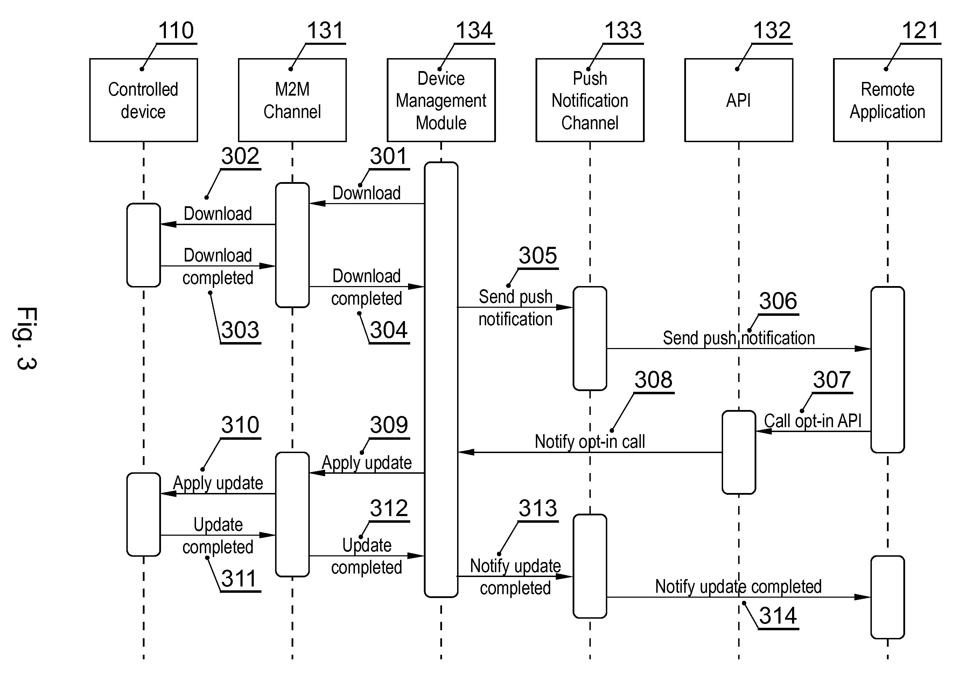

Figure 3 presents a call flow for software upgrade at the controlled device 110 with user opt-in.

The device management module 134 sends a download command 301 to the M2M channel 131, which delivers it as a message 302 to the controlled device 110. Once the controlled device 110 has completed the download, it sends back a download completed message 303 to the M2M channel 131, which delivers it to the device management module 134.

Upon receipt of the download completed message, the device management module 134 requests the delivery of a push notification message 305 via the push notification channel 133 to the remote application 121. The push notification channel 133 delivers it (306) to the remote application 121 registered for the controlled device owner.

The remote application 121 requests a user acceptance of software upgrade for the controlled device 110 and executes an opt-in API call 307 to notify the user acceptance.

The API 132, upon receipt of the incoming opt-in call, notifies the device management module 134 via a message 308.

The device management module 134 then sends to the M2M channel 131 an apply update command 309, which is delivered as a message 310 to the controlled device 110.

Once the controlled device 110 has completed the software upgrade, it sends an update completed message 311 to M2M channel 131, which delivers it to the device management module 134 as a message 312.

The device management module 134 can optionally issue a push notification 313 to inform the controlled device owner that the software upgrade process is completed. In case such push notification is used, it is delivered to the remote application 121 by the push notification channel 133 as a message 314.

The disclosed invention enables to execute software upgrades with user opt-in on a fleet of controlled devices in a scalable and effective manner, requiring neither any user interface element on the controlled device itself nor direct user interaction with the controlled device.

This provides better user experience and lower controlled device costs, as no additional hardware is needed in the user interface and no manual activity is required at the controlled device.

Thus, the presented system and method provide a useful, concrete and tangible result.

The aforementioned system and method are applicable in computer networks wherein devices, such as IoT controlled devices, communicate with the cloud service and wherein the cloud service communicates with a controlling device. Specific data processing is required during the process. As a result, new software is delivered to the controlled device and the state of the controlled device is changed by installing the updated software therein. Therefore the machine or transformation test is fulfilled and the idea is not abstract.

At least parts of the methods as described herein may be computer implemented. Accordingly, the presented system and method may take the form of an entirely hardware embodiment, an entirely software embodiment (including firmware, resident software, micro-code, etc.) or an embodiment combining software and hardware aspects that may all generally be referred to herein as a "circuit", "module" or "system".

Furthermore, the presented system and method may take the form of a computer program product embodied in any tangible medium of expression having computer usable program code embodied in the medium.

It can be easily recognized, by one skilled in the art, that the aforementioned method for installing software may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the system and method presented herein have been depicted, described, and has been defined with reference to particular preferred embodiments, such references and examples of implementation in the foregoing specification do not imply any limitation. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A method for installing software on a controlled device (110), comprising the steps of:
- instructing (203) the controlled device (110) to download a software file;
- sending (206) a notification to a controlling device (120) that software can be installed;
- receiving (208), from the controlling device (120), an acceptance message to install the software; and
- instructing (212) the controlled device (110) to install the software file.

2. The method according to claim 1, comprising sending (206) the notification to the controlling device (120) as a push notification and awaiting reception (207) of an opt-in API call.

3. The method according to any of previous claims, further comprising the step of logging the acceptance message and associated metadata in a database (135).

4. The method according to any of previous claims, further comprising scheduling (210) the time of installation of the software file.

5. The method according to claim 4, further comprising the steps of monitoring (213) for receipt of a message from the controlled device (110) confirming software installation or expiry of a timeout, and rescheduling the time of installation of the software file.

6. The method according to any of previous claims, further comprising the step of sending (216) a notification to the controlling device (120) that software has been installed.

7. The method according to any of previous claims, comprising communicating with the controlled device (110) using Message Queuing Telemetry Transport (MQTT) or a Constrained Application Protocol (CoAP).

8. The method according to any of previous claims, comprising communicating with the controlling device (120) using Representational State Transfer (REST) API over Hypertext Transfer Protocol Secure (HTTPS).

9. A computer program comprising program code means for performing all the steps of the method according to any of claims 1-8 when said program is run on a computer.

10. A computer readable medium storing computer-executable instructions performing all the steps of the method according to any of claims 1-8 when executed on a computer.

11. A system for installing software, the system comprising:
- at least one controlled device (110) comprising a control unit (111) coupled to a software memory (113) and a network interface (112);
- at least one controlling device (120); and
- at least one server communicatively connected via a network (130) with the controlled device (110) and the controlling device (120) and operating a device management module (134) configured to perform the steps of the method according to any of claims 1-8.
